# EUROPÄISCHE PATENTSCHRIFT

(11) **EP 1 196 303 B1**
(45) Veröffentlichungstag und Bekanntmachung des Hinweises auf die Patenterteilung: **24.03.2004**
(21) Anmeldenummer: 00958282.6
(22) Anmeldetag: 13.07.2000
(51) Int. Cl.: B60K 15/035

(54) **KRAFTSTOFFBEHÄLTER**
FUEL TANK
RESERVOIR DE CARBURANT

(30) Priorität: 16.07.1999 DE 19932713
(43) Veröffentlichungstag der Anmeldung: 17.04.2002
(73) Patentinhaber: Siemens AG, 80333 München (DE); Bayerische Motoren Werke Aktiengesellschaft, 80809 München (DE)
(72) Erfinder: DISTELHOFF, Markus, D-60594 Frankfurt (DE); ZAPP, Thomas, D-44265 Dortmund (DE); FUEHLING, Stefan, D-44269 Dortmund (DE); REISCHL, Helmut, D-81735 München (DE)
(86) Internationale Anmeldenummer: PCT/EP2000/006686
(87) Internationale Veröffentlichungsnummer: WO 2001/005614

(56) Entgegenhaltungen:
- EP-A- 0 822 110
- EP-A- 0 921 026
- DE-A- 3 040 160
- GB-A- 2 238 041
- US-A- 3 804 291
- US-A- 3 917 109

## Beschreibung

Die Erfindung betrifft einen Kraftstoffbehälter für ein Kraftfahrzeug gemäß Oberbegrift des Anspuchs 1.

Solche Kraftstoffbehälter werden in heutigen Kraftfahrzeugen häufig eingesetzt und sind aus der Praxis bekannt. Meist hat der Kraftstoffbehälter insgesamt zwei Sammelbehälter für eine Entlüftung während der Betankung und während des Betriebs des Kraftfahrzeuges. Die Verbindung des Innenraums des Kraftstoffbehälters und des Sammelbehälters erfolgt über Leitungen. Die Sammelbehälter dienen zur Trennung des über die Leitungen anströmenden flüssigen Kraftstoffs von gasförmigen Bestandteilen und Luft. Hierdurch wird verhindert, daß flüssiger Kraftstoff in die Druckausgleichseinrichtung gelangt und insbesondere den Aktivkohlefilter beschädigt.

Eine Kraftstoffbehälter nach dem Oberbegriff des Anspruchs 1 geht aus der US 3 917 109 hervor.

Nachteilig bei dem bekannten Kraftstoffbehälter. ist, daß er durch seine große Anzahl von Leitungen aufwendig zu montieren ist und starke Emissionen von Kraftstoff freisetzt.

Der Erfindung liegt das Problem zugrunde, einen Kraftstoffbehälter der eingangs genannten Art so zu gestalten, daß er besonders geringe Emissionen freisetzt und möglichst einfach zu montieren ist.

Dieses Problem wird durch die Merkmale des Anspruchs 1 gelöst.

Dadurch daß der Sammelbehälter innerhalb des Kraftstoffbehälters angeordnet ist oder einen Teilbereich dessen Wandung bildet benötigt der Kraftstoffbehälter keine Leitung zwischen seinem Innenraum und dem Sammelbehälter, da der Sammelbehälter unmittelbar an den Innenraum des Kraftstoffbehälters angrenzt und hierdurch einfach mit diesem verbunden werden kann. Dies führt zu einer starken Vereinfachung der Montage des erfindungsgemäßen Kraftstoffbehälters. Weiterhin können durch den Wegfall der zu verlegenden Leitung ihre zwei Anschlüsse an dem Sammelbehälter und dem Kraftstoffbehälter vermieden werden. Da die Emissionen des Kraftstoffs durch die Anschlüsse besonders groß sind, führt die erfindungsgemäße Gestaltung des Kraftstoffbehälters zu einer starken Verringerung seiner Emissionen. Ein weiterer Vorteil dieser Gestaltung besteht darin, daß bei einem Crash des Kraftfahrzeuges die Gefahr eines Abreißens von Leitungen und Behältern von dem Kraftstoffbehälter besonders gering gehalten wird.

Bei Kurvenfahrten oder Schräglage des Kraftfahrzeuges kann über den Sammelbehälter Kraftstoff in die Druckausgleichseinrichtung und anschließend in die Umwelt gelangen. Kraftstoff läßt sich jedoch zuverlässig innerhalb des Kraftstoffbehälters halten, wenn eine zu der Druckausgleichseinrichtung führende Leitung von einem Umschaltventil absperrbar ist. Weiterhin wird durch diese Gestaltung verhindert, daß der in der Druckausgleichseinrichtung befindliche Aktivkohlefilter mit Kraftstoff benetzt und dadurch dauerhaft geschädigt wird.

Der Kraftstoffbehälter könnte jeweils einen Sammelbehälter für die Betriebsentlüftung und die Betankungsentlüftung aufweisen. Der Kraftstoffbehälter ist jedoch besonders einfach aufgebaut, wenn das Umschaltventil zur wechselnden Verbindung der Druckausgleichseinrichtung mit dem Sammelbehälter oder mit dem Innenraum des Kraftstoffbehälters gestaltet ist. Hierdurch läßt sich der Kraftstoffbehälter zudem besonders kostengünstig fertigen.

Eine ständige Benetzung des Umschaltventils mit Kraftstoff läßt sich einfach vermeiden, wenn das Umschaltventil an der Innenseite der oberen Wandung des Kraftstoffbehälters angeordnet ist. Dies trägt zur weiteren Verringerung der Emissionen von Kraftstoff bei.

Das Umschaltventil könnte beispielsweise mechanisch von einem Verschlußdeckel eines Einfüllstutzens des Kraftstoffbehälters oder einer im Einfüllstutzen von einer Zapfpistole bewegbaren Umschaltklappe betätigt werden. Das Umschaltventil läßt sich jedoch in Abhängigkeit von Fahrsituationen des Kraftfahrzeuges jederzeit ansteuern, wenn das Umschaltventil als Magnetventil ausgebildet ist.

Zur weiteren Vereinfachung der Montage des erfindungsgemäßen Kraftstoffbehälters trägt es bei, wenn die zu der Druckausgleichseinrichtung führende Leitung durch einen Montagedeckel einer Kraftstoffördereinheit geführt ist.

Insbesondere bei flachen Geometrien von Kraftstoffbehältern kann Kraftstoff in den Sammelbehälter gelangen. Bei ansteigendem Innendruck innerhalb des Kraftstoffbehälters könnte dieser Kraftstoff zu der Druckausgleichseinrichtung gedrückt werden. Eine Führung des Kraftstoffs in die Druckausgleichseinrichtung läßt sich gemäß der Erfindung zuverlässig vermeiden, wenn der Sammelbehälter mit der Saugseite einer Pumpe verbunden ist. Hierdurch läßt sich in dem Sammelbehälter vorhandener Kraftstoff absaugen.

Die Pumpe könnte beispielsweise unmittelbar elektrisch angetrieben sein. Luft und Kraftstoff lassen sich jedoch gemäß einer anderen vorteilhaften Weiterbildung gleichermaßen fördern, wenn die Pumpe als Saugstrahlpumpe ausgebildet ist.

Der Sammelbehälter vermag gemäß einer anderen vorteilhaften Weiterbildung der Erfindung flüssigen Kraftstoff von gasförmigem Kraftstoff und Luft einfach zu trennen, wenn der Sammelbehälter eine trichterförmige Vertiefung aufweist. Um ein Ablaufen des flüssigen Kraftstoffs zu ermöglichen, kann die Vertiefung eine Öffnung aufweisen.

Eine Aufschäumung und Verwirbelung von im Sammelbehälter vorhandenem Kraftstoff läßt sich gemäß einer anderen vorteilhaften Weiterbildung der Erfindung einfach vermeiden, wenn die Pumpe an der Vertiefung des Sammelbehälters angeschlossen ist.

Die Pumpe läßt sich an einer nahezu beliebigen Stelle im Kraftstoffbehälter anordnen. Der erfindungsgemäße Kraftstoffbehälter benötigt jedoch einen besonders geringen Verlegungsaufwand für Leitungen, wenn die Pumpe innerhalb des Sammelbehälters angeordnet ist.

Die Saugstrahlpumpe könnte beispielsweise von einer eigenen elektrisch betriebenen Pumpe mit Kraftstoff als Treibmittel versorgt werden. Der Verbrauch von elektrischer Energie für die Pumpe läßt sich jedoch gemäß einer anderen vorteilhaften Weiterbildung der Erfindung einfach vermeiden, wenn die als Saugstrahlpumpe ausgebildete Pumpe zur Versorgung mit Kraftstoff als Treibmittel mit einer Vorlaufleitung oder Rücklaufleitung einer Brennkraftmaschine verbunden ist. Hierfür kann die Saugstrahlpumpe an eine Vorlaufleitung oder eine Rücklaufleitung der Brennkraftmaschine des Kraftfahrzeuges angeschlossen werden.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine schematische Darstellung eines erfindungsgemäßen Kraftstoffbehälters eines Kraftfahrzeuges im Längsschnitt,
- Figur 2: eine weitere Ausführungsform des erfindungsgemäßen Kraftstoffbehälters.

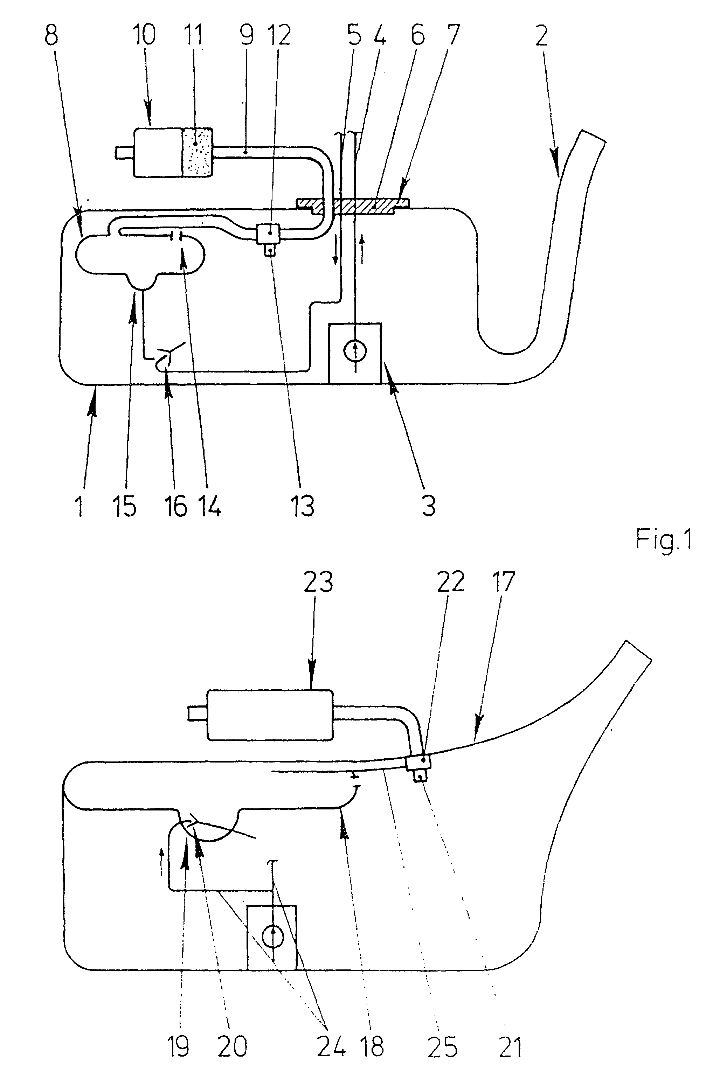

Figur 1 zeigt einen Kraftstoffbehälter 1 mit einem Einfüllstutzen 2 zum Einfüllen von Kraftstoff. In dem Kraftstoffbehälter 1 ist eine Kraftstoffördereinheit 3 angeordnet, welche Kraftstoff über eine Vorlaufleitung 4 zu einer nicht dargestellten Brennkraftmaschine eines Kraftfahrzeuges fördert. Überschüssiger Kraftstoff gelangt von der Brennkraftmaschine über eine Rücklaufleitung 5 zurück in den Kraftstoffbehälter 1. Der Kraftstoffbehälter 1 hat eine von einem Montagedeckel 6 verschlossene Montageöffnung 7 für die Kraftstoffördereinheit 3. Die Vorlaufleitung 4 und die Rücklaufleitung 5 sind durch den Montagedeckel 6 hindurchgeführt. Innerhalb des Kraftstoffbehälters 1 ist ein Sammelbehälter 8 angeordnet. Der Sammelbehälter 8 ist über eine ebenfalls durch den Montagedeckel 6 hindurchgeführte Leitung 9 mit einer Druckausgleichseinrichtung 10 mit einem Aktivkohlefilter 11 verbunden. Die Leitung 9 läßt sich von einem elektromagnetisch schaltbaren Umschaltventil 12 versperren und die Druckausgleichseinrichtung 10 mit einem unmittelbar in den Kraftstoffbehälter 1 mündenden Anschlußstutzen 13 verbinden. Der Sammelbehälter 8 weist zudem eine Öffnung 14 zur Verbindung mit dem Innenraum des Kraftstoffbehälters 1 auf. Beim Betrieb der Brennkraftmaschine verbindet das Umschaltventil 12 den Sammelbehälter 8 mit der Druckausgleichseinrichtung 10, während bei einer Betankung des Kraftstoffbehälters 1 das Umschaltventil 12 den in den Innenraum mündenden Anschlußstutzen 13 mit der Druckausgleichseinrichtung 10 verbindet. Weiterhin zeigt Figur 1, daß der Sammelbehälter 8 eine trichterförmige Vertiefung 15 aufweist. Die trichterförmige Vertiefung 15 ist mit der Saugseite einer als Saugstrahlpumpe ausgebildeten Pumpe 16 verbunden. Die Rücklaufleitung 5 führt Kraftstoff als Treibmittel zu der Pumpe 16. Die Pumpe 16 stellt sicher, daß in der trichterförmigen Vertiefung 15 des Sammelbehälters 8 vorhandener Kraftstoff abgesaugt wird.

Figur 2 zeigt eine weitere Ausführungsform des erfindungsgemäßen Kraftstoffbehälters 17 mit einem einteilig mit seiner Wandung gefertigten Sammelbehälter 18. Der Sammelbehälter 18 hat eine trichterförmige Vertiefung 19 zur Sammlung von eindringendem Kraftstoff und zur Aufnahme einer als Saugstrahlpumpe ausgebildeten Pumpe 20. Ein mit dem Sammelbehälter 18 und einem unmittelbar in den Kraftstoffbehälter 17 mündenden Anschlußstutzen 21 verbundenes Umschaltventil 22 ist an der Innenseite des Kraftstoffbehälters 17 angeordnet. Eine den Sammelbehälter 18 mit dem Umschaltventil 22 verbindende Leitung 25 ist ebenfalls einteilig mit der Wandung des Kraftstoffbehälters 17 gefertigt. Das Umschaltventil 22 stellt wahlweise eine Verbindung des Sammelbehälters 18 oder des Anschlußstutzens 21 mit einer außerhalb des Kraftstoffbehälters 17 angeordneten Druckausgleichseinrichtung 23 her. Die als Saugstrahlpumpe ausgebildete Pumpe 20 wird von einem Abzweig einer Vorlaufleitung 24 mit Kraftstoff als Treibmittel versorgt. Die Funktion der Pumpe 20 und des Umschaltventils 22 erfolgt wie in Figur 1 beschrieben.

## Patentansprüche

1. Kraftstoffbehälter (1) für ein Kraftfahrzeug mit einem Sammelbehälter (8) zu seiner Entlüftung, wobei der Sammelbehälter (8) mit dem Innenraum des Kraftstoffbehälters (1) und mit einer Druckausgleichseinrichtung (10), insbesondere einem Aktivkohlefilter (11), verbunden ist, und wobei der Sammelbehälter (8, 18) innerhalb des Kraftstoffbehälters (1, 17) angeordnet ist oder einen Teilbereich dessen Wandung bildet **dadurch gekennzeichnet, daß** der Sammelbehälter (8, 18) mit der Saugseite einer Pumpe (16, 20) verbunden ist.

2. Kraftstoffbehälter nach Anspruch 1, **dadurch gekennzeichnet, daß** eine zu der Druckausgleichseinrichtung (10, 23) führende Leitung (9, 25) von einem Umschaltventil (12, 22) absperrbar ist.

3. Kraftstoffbehälter nach Anspruch 1 oder 2, **dadurch gekennzeichnet, daß** das Umschaltventil (12, 22) zur wechselnden Verbindung der Druckausgleichseinrichtung (10, 23) mit dem Sammelbehälter (8, 18) oder mit dem Innenraum des Kraftstoffbehälters (1, 17) gestaltet ist.

4. Kraftstoffbehälter nach zumindest einem der vorhergehenden Ansprüche, **dadurch gekennzeichnet, daß** das Umschaltventil (12, 22) an der Innenseite der oberen Wandung des Kraftstoffbehälters (1, 17) angeordnet ist.

5. Kraftstoffbehälter nach zumindest einem der vorhergehenden Ansprüche, **dadurch gekennzeichnet, daß** das Umschaltventil (12, 22) als Magnetventil ausgebildet ist.

6. Kraftstoffbehälter nach zumindest einem der vorhergehenden Ansprüche, **dadurch gekennzeichnet, daß** die zu der Druckausgleichseinrichtung (10) führende Leitung (9) durch einen Montagedeckel (6) einer Kraftstoffördereinheit (3) geführt ist.

7. Kraftstoffbehälter nach zumindest einem der vorhergehenden Ansprüche, **dadurch gekennzeichnet, daß** die Pumpe (16, 20) als Saugstrahlpumpe ausgebildet ist.

8. Kraftstoffbehälter nach zumindest einem der vorhergehenden Ansprüche, **dadurch gekennzeichnet, daß** der Sammelbehälter (8, 18) eine trichterförmige Vertiefung (15, 19) aufweist.

9. Kraftstoffbehälter nach zumindest einem der vorhergehenden Ansprüche, **dadurch gekennzeichnet, daß** die Pumpe (16, 20) an der Vertiefung (15, 19) des Sammelbehälters (8, 18) angeschlossen ist.

10. Kraftstoffbehälter nach zumindest einem der vorhergehenden Ansprüche, **dadurch gekennzeichnet, daß** die Pumpe (20) innerhalb des Sammelbehälters (18) angeordnet ist.

11. Kraftstoffbehälter nach zumindest einem der vorhergehenden Ansprüche, **dadurch gekennzeichnet, daß** die als Saugstrahlpumpe ausgebildete Pumpe (16, 20) zur Versorgung mit Kraftstoff als Treibmittel mit einer Vorlaufleitung (24) oder Rücklaufleitung (5) einer Brennkraftmaschine verbunden ist.

## Claims

1. Fuel tank (1) for a motor vehicle with a collector tank (8) for extracting air from it, the collector tank (8) being connected to the interior of the fuel tank (1) and to a pressure-equalizing device (10), in particular an activated carbon filter (11), and the collector tank (8, 18) being arranged within the fuel tank (1, 17), or forming a subregion of the wall thereof, **characterized in that** the collector tank (8, 18) is connected to the suction side of a pump (16, 20).

2. Fuel tank according to Claim 1, **characterized in that** a line (9, 25) leading to the pressure-equalizing device (10, 23) can be shut off by a changeover valve (12, 22).

3. Fuel tank according to Claim 1 or 2, **characterized in that** the changeover valve (12, 22) is configured for alternating connection of the pressure-equalizing device (10, 23) to the collector tank (8, 18) or to the interior of the fuel tank (1, 17).

4. Fuel tank according to at least one of the preceding claims, **characterized in that** the changeover valve (12, 22) is arranged on the inside of the top wall of the fuel tank (1, 17).

5. Fuel tank according to at least one of the preceding claims, **characterized in that** the changeover valve (12, 22) is designed as a solenoid valve.

6. Fuel tank according to at least one of the preceding claims, **characterized in that** the line (9) leading to the pressure-equalizing device (10) is routed through an installation cover (6) of a fuel-delivery unit (3).

7. Fuel tank according to at least one of the preceding claims, **characterized in that** the pump (16, 20) is designed as a suction jet pump.

8. Fuel tank according to at least one of the preceding claims, **characterized in that** the collector tank (8, 18) has a funnel-like depression (15, 19).

9. Fuel tank according to at least one of the preceding claims, **characterized in that** the pump (16, 20) is connected to the depression (15, 19) of the collector tank (8, 18).

10. Fuel tank according to at least one of the preceding claims, **characterized in that** the pump (20) is arranged within the collector tank (18).

11. Fuel tank according to at least one of the preceding claims, **characterized in that**, for a supply with fuel as the working fluid, the pump (16, 20), which is designed as a suction jet pump, is connected to a flow line (24) or return line (5) of an internal combustion engine.

## Revendications

1. Réservoir de carburant (1) pour un véhicule automobile, comportant un réservoir de collecte (8) pour son dégazage, le réservoir de collecte (8) étant relié à l'espace intérieur du réservoir de carburant (1) et à un dispositif d'égalisation des pressions (10), en particulier un filtre à charbon actif (11), et le réservoir de collecte (8, 18) étant disposé à l'intérieur du réservoir de carburant (1, 17) ou formant une zone partielle de sa paroi,
**caractérisé en ce que** le réservoir de collecte (8, 18) est relié avec le côté aspiration d'une pompe (16, 20).

2. Réservoir de carburant suivant la revendication 1, **caractérisé en ce qu'**une conduite (9, 25) conduisant au dispositif d'égalisation des pressions (10, 23) peut être fermée par une soupape d'inversion (12, 22).

3. Réservoir de carburant suivant la revendication 1 ou 2, **caractérisé en ce que** la soupape d'inversion (12, 22) est conçue pour relier alternativement le dispositif d'égalisation des pressions (10) au réservoir de collecte (8, 18) ou à l'espace intérieur du réservoir de carburant (1, 17).

4. Réservoir de carburant suivant au moins l'une des revendications précédentes, **caractérisé en ce que** la soupape d'inversion (12, 22) est disposée contre la face interne de la paroi supérieure du réservoir de carburant (1, 17).

5. Réservoir de carburant suivant au moins l'une des revendications précédentes, **caractérisé en ce que** la soupape d'inversion (12, 22) est réalisée sous la forme d'une électrovanne.

6. Réservoir de carburant suivant au moins l'une des revendications précédentes, **caractérisé en ce que** la conduite (9) conduisant au dispositif d'égalisation des pressions (10) traverse un couvercle de montage (6) d'une unité d'alimentation en carburant (3).

7. Réservoir de carburant suivant au moins l'une des revendications précédentes, **caractérisé en ce que** la pompe (16, 20) est réalisée sous la forme d'une pompe à jet aspirant.

8. Réservoir de carburant suivant au moins l'une des revendications précédentes, **caractérisé en ce que** le réservoir de collecte (8, 18) présente une cavité en forme d'entonnoir (15, 19).

9. Réservoir de carburant suivant au moins l'une des revendications précédentes, **caractérisé en ce que** la pompe (16, 20) est raccordée à la cavité (15, 19) du réservoir de collecte (18).

10. Réservoir de carburant suivant au moins l'une des revendications précédentes, **caractérisé en ce que** la pompe (20) est disposée à l'intérieur du réservoir de collecte (18).

11. Réservoir de carburant suivant au moins l'une des revendications précédentes, **caractérisé en ce que** la pompe (16, 20), réalisée sous la forme d'une pompe à jet aspirant, est reliée à une conduite d'arrivée (24) ou à une conduite de départ d'un moteur à combustion interne, pour l'alimentation en carburant comme moyen d'entraînement.
